# EUROPÄISCHE PATENTSCHRIFT

(11) **EP 4 038 304 B1**
(45) Veröffentlichungstag und Bekanntmachung des Hinweises auf die Patenterteilung: **02.07.2025**
(21) Anmeldenummer: 20789445.2
(22) Anmeldetag: 01.10.2020
(51) Int. Cl.: F16L 55/1645, F16L 55/179, F16L 55/26, F16L 55/18

(54) **VORABDICHTUNG VOR DEM SANIEREN EINER LEITUNG**
PRESEALING BEFORE RENOVATING A CONDUIT
PRÉSCELLEMENT AVANT LA RÉNOVATION D'UN CONDUIT

(30) Priorität: 01.10.2019 DE 102019006863
(43) Veröffentlichungstag der Anmeldung: 10.08.2022
(73) Patentinhaber: Pipetronics GmbH & Co. KG, 76865 Rohrbach (DE)
(72) Erfinder: NOLL, Christian, 67117 Limburgerhof (DE)
(74) Vertreter: Dr. Langfinger & Partner
(86) Internationale Anmeldenummer: PCT/DE2020/100844
(87) Internationale Veröffentlichungsnummer: WO 2021/063448

(56) Entgegenhaltungen:
- EP-A1- 0 909 783
- WO-A1-90/05874
- CH-A5- 678 651
- DE-T2- 69 314 011

## Beschreibung

Die vorliegende Erfindung betrifft eine Vorrichtung zum Sanieren von schadhaften Leitungswandungen im Bereich des Anschlusses einer Nebenleitung an eine Hauptleitung.

Es sind Vorrichtungen für eine solche Sanierung im Stand der Technik bekannt, bei denen ein selbstfahrender oder mit Seilen im Kanal verfahrbarer Kanalsanierungsroboter eine Tragvorrichtung für verschiedene Sanierungswerkzeuge umfasst. Diese Werkzeuge, insbesondere eine Spachteleinrichtung, lassen sich nach Positionierung des Roboters im Schadstellenbereich von außerhalb des Kanals aus steuern.

Für die Reparatur von Schadstellen im Bereich des Anschlusses einer Nebenleitung an eine Hauptleitung sind zudem Vorrichtungen im Stand der Technik beschrieben, bei denen der im Hauptkanal anordnenbare Kanalsanierungsroboter eine Tragvorrichtung für eine im Bereich des Nebenkanalanschlusses an die Wandung des Hauptleitung anlegbare Abdeckung bildet.

Die Abdeckung trägt ihrerseits einen in die Nebenleitung einbringbaren, aufweitbaren Dehnkörper, auch Blase genannt. Im aufgeweiteten Zustand liegt dieser Dehnkörper gegen die Wandung der Nebenleitung an und bildet dann zusammen mit der Abdeckung eine Schalung aus, die eine in diese Schalung eingebrachte viskose Dichtmasse vor einem Aushärten derselben stützt. Nach dem Aushärten wird der Dehnkörper kontrahiert und die Abdeckung entfernt und die Dichtmasse bildet die wiederhergestellten, vorher schadhaften Kanalwandungsbereiche. Ein solche Abdeckung gemäß dem Stand der Technik, auch als Schalungsmanschette bezeichnet, ist in einer Ausführungsform grundsätzlich aus WO 1995027167A1 vorbekannt.

Grundsätzlich besteht die Möglichkeit die von den Vorrichtungen der beschriebenen Art verwendete viskose aushärtbare Dichtmasse vom Kanaläußeren aus über Schläuche oder andere bewegliche Leitungen dem Kanalsanierungsgerät zuzuführen.

Des weiteren sind Verfahren im Stand der Technik bekannt, bei denen zur Sanierung von Leitungssystemen, z.B. von Kanälen und ähnlichen Rohrsystemen, eine flexibler, mit einer mit härtbaren Harz getränkte aushärtbare Lage, die als Auskleidungsschlauch, auch als Liner bezeichnet, dient, in das Leitungssystem eingeführt wird. Nach dem Einführen wird der Auskleidungsschlauch aufgeweitet, so dass er sich eng an die Innenwand des Leitungssystems anschmiegt. Anschließend wird das Harz ausgehärtet.

Die Herstellung eines derartigen Auskleidungsschlauches ist beispielsweise in der WO 95/04646 beschrieben. Ein solcher Auskleidungsschlauch weist üblicherweise eine lichtundurchlässige äußere Schutzfolie, eine mindestens für bestimmte Wellenlängenbereiche elektromagnetischer Strahlung durchlässige Innenfolie sowie eine mit einem Harz getränkte aushärtbare Lage auf, die zwischen der Innenfolie und der Außenfolie angeordnet ist.

Der Aussenfolienschlauch soll verhindern, dass das zur Imprägnierung verwendete Harz aus der aushärtbaren Lage austritt und in die Umwelt gelangt. Dies setzt eine gute Dichtigkeit und Anbindung des äußeren Folienschlauchs an die harzgetränkte aushärtbare Lage voraus.

Aus der WO 00/73692 A1 ist ein Auskleidungsschlauch bekannt umfassend einen Innenfolienschlauch, ein mit einem Harz getränktes Faserband als aushärtbare Lage und einen Außenschlauch, der an seiner Innenseite mit einem Faservlies kaschiert ist.

Die Auskleidungsschläuche werden vor dem Aushärten in die zu sanierenden Leitungssystem eingeführt und mittels eines Fluids, i.d.R. Druckluft, aufgeblasen. Für ein Aufblasen des Auskleidungsschlauchs wird ein Öffnungsende des Auskleidungsschlauchs gemäß dem Stand der Technik mit Druckluft beaufschlagt und das gegenüberliegende Öffnungsende des Auskleidungsschlauchs mit einer Verschlussvorrichtung, einem sogenannten Packer, verschlossen. Diese Verschlussvorrichtung umfasst dabei einen Hohlzylinder und ein Abdeckelement, mit welchem der Hohlzylinder verschlossen werden kann.

In den Auskleidungsschlauch wird zum Aushärten desselben eine Aushärtevorrichtung eingeführt, die eine Strahlungsquelle aufweist, und die durch den Auskleidungsschlauch geführt wird, um mit der Strahlungsenergie die Aushärtung der aushärtbaren Lagen des Auskleidungsschlauchs zu aktivieren bzw. vorzunehmen. Dabei ist eine vollständige Aushärtung der Auskleidungsschläuche von großer Bedeutung, d.h. es muss eine bestimmte Menge Strahlungsenergie an jeden Punkt des Auskleidungsschlauchs in diesen eingebracht werden. Die Menge an Strahlungsenergie hängt dabei von der Leistungsabgabe der Strahlungsquellen sowie der Geschwindigkeit ab, mit der diese durch den Auskleidungsschlauch durchgeführt werden.

Für eine Regelung der Aushärtung ist es daher wichtig, die Position der Vorrichtung zum Aushärten zu kennen, um die Abgabe der Strahlungsenergie zu regeln. Aus der CH 678 651 A5 ist ein Verfahren zum Abdichten von Rohrleitungen bekannt. Das Verfahren sieht vor, dass in einem auszukleidenden Rohr eine Harzschicht direkt auf die Rohrinnenfläche aufgebracht wird. Zur Eliminierung der Feuchtigkeit wird die mit Wasser reagierende Komponente des Harzsystems auf die Rohrinnenfläche aufgesprüht, wodurch das Wasser abgebunden wird. Anschließend wird die Harzmischung im Schleuderverfahren aufgebracht.

Des weiteren umfassen Leitungssystem in den Regel Zuleitungen oder Nebenkanäle. Diese müssen nach dem Einziehen und Aushärten des Auskleidungsschlauchs wieder freigelegt werden. Hierzu kommen in der Regel Vorrichtungen zum Einsatz, die einen Roboterarm mit einer dort angebrachten Bohr- oder Fräseinrichtung umfassen.

Ein besonders fehleranfälliger Aspekt ist das Vorhandensein oder das Eindringen von Wasser. Gerade bei der Sanierung von Leitungen mit Auskleidungsschläuchen ist es erforderlich, dass sich kein Wasser in der beschädigten Leitung befindet. Gerade dies kommt aber sehr oft vor, und zwar beispielsweise durch beschädigte Muffen, undichte Seiteneinläufe oder sonstige Defekte.

Für den Anwender ist es daher wichtig, dieses eindringede Wasser möglichst einfach, schnell und kostengünstig zu stoppen. Dies soll

Daher lag die Aufgabe der vorliegenden Erfindung darin, die Nachteile des Standes der Technik zu überwinden und insbesondere eine Vorrichtung und ein Verfahren zu liefern, die eine schnellere und zuverlässigere Vorabdichtung von Leitungen zur Sanierung derselben ermöglicht.

Diese Aufgabe wird gelöst durch eine Vorrichtung umfassend einen Vorratsbehälter für PU-Material sowie eine Ausbringöffnung, wobei der Vorratsbehälter, insbesondere wasserreaktives, PU-Material enthält, und wobei die Ausbringöffnung der Vorrichtung an eine Schadstelle einer Leitung verbringbar ist, so dass das PU-Material die Schadstelle abdichtet.

Mit der erfindungsgemäßen Vorrichtung wird das Problem gelöst, dass ein unkontrollierter Zulauf von Wasser durch Schadstellen und/oder durch Zulaufleitungen als solche die Sanierung behindert. Wie ausgeführt ist es gerade bei der Sanierung von Leitungen mit Auskleidungsschläuchen erforderlich, dass sich kein Wasser in der beschädigten Leitung befindet. Genau dies kommt aber sehr oft vor, und zwar beispielsweise durch beschädigte Muffen, undichte Seiteneinläufe oder sonstige Defekte, wobei mittels der erfindungsgemäßen Lösung der unkontrollierte Zulauf von Wasser schnell, insbesondere provisorisch, gestoppt werden kann.

Besonders vorteilhaft ist es dabei, wenn das PU-Material oder der PU-Schaum wasseraktiv ist, weil dieser genau an den notwendigen Stellen aushärtet und somit ein ungewolltes Eindringen von Wasser sicher verhindert.

Dabei kann es insbesondere vorgesehen sein, dass es sich bei dem PU-Material um einen Ein-Komponenten PU-Material und/oder PU-Schaum handelt.

Entsprechende Materialien und Schäume sind dem Fachmann aus anderen Anwendungen bekannt. Eine entsprechende Kartusche mit nur einer Kammer lässt sich dabei besonders einfach auf einer erfindungsgemäßen Vorrichtung anordnen.

Erfindungsgemäß ist vorgesehen, dass der Vorratsbehälter ein Zwei-Kammer System mit einem Statikmischer umfasst.

Dies ist insbesondere dann vorteilhaft, wenn anstelle eines Ein-Komponenten PU-Materials oder PU-Schaums ein Zwei-Komponenten PU-Material oder PU-Schaum zum Einsatz kommt.

Des weiteren kann vorgesehen sein, dass ein pneumatischer Aktuator umfasst ist, der ausgelegt und eingerichtet ist, das PU-Material und/oder den PU-Schaum aus dem Vorratsbehälter durch die Ausbringöffnung zu pressen.

Eine solcher Aktuator ist notwendig, damit das PU-Material bzw. der PU-Schaum an die gewünschte Stelle aus dem Vorratsbehälter verbracht werden kann.

Des weiteren ist es bevorzugt, dass der Vorratsbehälter, die Ausbringöffnung und der pneumatische Aktor auf einem fahrbaren Trägerelement angeordnet sind.

Durch eine Anordnung des Vorratsbehälters, der Ausbringöffnung und des pneumatischen Aktors auf einem gemeinsamen fahrbaren Trägerelement wird es ermöglicht, das PU-Material bzw. den PU-Schaum an die gewünschte Stelle innerhalb des Leitungssystems zu verbringen.

Auch kann es vorgesehen sein, dass auf dem Trägerelement ein Abdeckelement angeordnet ist, wobei das Abdeckelement eine Aussparung aufweist, durch die das PU-Material und/oder der PU-Schaum in den Raum zwischen der Schalung und der zu der Schalung benachbarten Wandungen der Haupt- und Nebenleitung einbringbar ist.

Es kann vorgesehen sein, dass mit dem PU-Material bzw. dem PU-Schaum dirket eine Schadstelle repariert wird und das reaktive PU-Material die Schadstelle wasserdicht verschließt. Es ist aber genauso ein Anwendungsfall vorgesehen, bei dem das PU-Material in Richtung des Leitungssystems durch eine Schalung gehalten wird. Dies kann insbesondere bei großflächigeren Ausbräuchen, großen Schadstellen oder für den Fall, das Zuläufe verschlossen werden sollen, vorteilhaft sein.

Auch kann es vorgesehe sein, dass das PU-Material und/oder der PU-Schaum in zwei Komponenten bereitgestellt ist, wobei in der Aufbewahrungseinrichtung beide Komponenten getrennt gelagert sind, und wobei eine Mischeinrichtung umfasst ist, die vor und/oder nach dem Transportmittel angeordnet ist, wobei die Mischeinrichtung ausgelegt und eingerichtet ist, um beide Komponenten in einem vorbestimmten Mischverhältnis nach Entnahme aus der Aufbewahrungseinrichtung und vor Einbringen in den Raum zwischen der Schalung und der zu der Schalung benachbarten Wandungen der Haupt- und Nebenleitung zu Mischen.

Anstelle des gemäß einer Ausführungsform bevorzugten, insbesondere wassereaktiven, Ein-Komponenten PU-Materials bzw. Schaums kann auch ein Zwei-Komponenten PU-Material vorteilhaft sein, da über dieses die Eigenschaften des PU-Materials erweitert festlegbar sind.

Entsprechende PU-Materialien sind dem Fachmann dabei bekannt.

Auch kann es vorteilhaft sein, dass die Vorrichtung eine Heizeinrichtung umfasst, die in das Abdeckelement, eine in einen Seitenzulauf integrierte Blase und/oder in das Transportmittel und/oder mit dem Abdeckelement, mit der Blase und/oder mit dem Transportmittel mindestens im Bereich der zweiten Aussparung in Wirkverbindung steht, wobei insbesondere die Heizeinrichtung in Form eines Heizschlauchs, einer Strahlungsquelle, insbesondere einer Infrarot-Heizvorrichtung und/oder einer Mikrowellenerzeugungseinrichtung, und/oder einer Elektroheizung ausgebildet ist.

Durch eine erfindungsgemäße Heizeinrichtung kann dabei die Aushärtedauer des PU-Materials bzw. PU-Schaums deutlich reduziert werden. Erfindungsgemäß kann dabei die Heizeinrichtung in das Abdeckelement und/oder in das Transportmittel mindestens im Bereich der zweiten Aussparung integriert werden oder mit diesem Bereich in Wirkverbindung stehen.

Somit kann das PU-Material vorzugsweise bereits in dem Transportmittel, meist einem Schlauch, vorgeheizt werden. Alternativ oder zusätzlich kann eine Heizeinrichtung auch in die Schalung integriert werden und Heizleistung während des gesamten Aushärtevorgangs zur Beschleunigung desselben bereitstellen.

Des weiteren kann vorgesehen sein, dass das PU-Material und/oder der PU-Schaum aus der Aufbewahrungseinrichtung durch eine Druckbeaufschlagung im Inneren der Aufbewahrungseinrichtung und/oder durch eine Pumpeinrichtung über das Transportmittel in den Raum hinter der Schalung einbringbar ist.

Des weiteren kann vorgesehen sein, dass das Abdeckelement in einem Transportzustand einen geringeren Innendurchmesser aufweist als in einem Betriebszustand, und insbesondere in Form einer Schalungs-Manschette aufgebildet ist.

Die Ausbildung des Abdeckelement mit unterschiedlichen Innendurchmessern ist vorteilhaft und aus dem Stand der Technik bekannt. Insbesondere eine Ausbildung des Abdeckelements in Form einer Schalungsmanschette hat den Vorteil, dass sich das zylinderförmige Abdeckelement sehr gut in der Leitung transportieren lässt und im Betriebstzustand sehr sicher fixiert ist, da es sich innerhalb der Hauptleitung selbstständig ausrichtet und durch den Anpressdruck in der gewünschten Position arretieren lässt, ohne dass weitere Hilfsmittel zum Einsatz kommen müssen.

Auch kann es vorteilhaft sein, dass der Ausleger mittels mindestens eines Aktuators, insbesondere eines Elektromotors, in der mindestens einen Raumachse, insbesondere in zwei, bevorzugt in drei Raumachsen bewegbar ist, um die Auslassöffnung an die gewünschte Stelle im Leitungssystem zu verbringen.

Des weiteren kann es schließlich bevorzugt sein, dass eine Kamera umfasst ist, die auf dem Trägerelement angeordnet ist, wobei die Kamera benachbart zu dem Ausleger angeordnet ist.

Auch liefert die Erfidnung ein Verfahren zum Sanieren von schadhaften Leitungswandungen, umfassend die folgenden Schritte, insbesondere in dieser Reihenfolge:
- Einbringen einer Vorrichtung in eine Leitung mit einem Vorratsbehälter für PU-Material, welches schäumt und mit Wasser reagiert;
- Einbringen des PU-Materials an der oder benachbart zu einer oder mehreren Schadstelle und/oder Zuläufen, insbesondere zum Vorabdichten der Leitung.

Bei dem erfindungsgemäßen Verfahren kann es insbesondere bevorzugt sein, dass das PU-Material mit Hilfe einer erfindungsgemäßen Vorrichtung eingebracht wird.

Schließlich liefert die Erfindung auch eine Verwendung einer erfindungsgemäßen Vorrichtung für eine Sanierung von schadhaften Leitungswandungen im Bereich des Anschlusses einer Nebenleitung an eine Hauptleitung.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert wird, ohne dadurch die Erfindung zu beschränken.

Dabei zeigt:
Fig. 1: Eine perspektivische Ansicht einer ersten Ausführungsform mit einem Zwei-Komponenten PU-Material;
Fig. 2: Die Vorrichtung aus Figur 1 in Kombination mit einer Schalung und einer entsprechenden Transportvorrichtung;
Fig. 3: Eine Abdichtung einer Schadstelle; und
Fig. 4: Eine Abdichtung und Reparatur eines Seiteneinlaufs.

Bei der Sanierung von Leitungssystemen ist es wie ausgeführt erforderlich, dass sich kein Wasser im defekten Rohr befindet. Das aber gerade zu sanierende Leitungen schadhaft sind - meist der Grund der Sanierung - kommt es sehr häufig vor dass über undichte Muffen, undichte Seiteneinläufe und sonstige Defekte Wasser in der Leitung befindet.

Für den Anwender ist es sehr wichtig, dass das eindringende Wasser vor der Sanierung schnell und kostengünstig gestoppt wird. Die erfindungsgemäße Lösung, die anhand der nachfolgenden Ausführungsformen beschrieben wird, greift hierbei auf PU-Material zurück, welches schäumt und mit Wasser reagiert, um eine Vorabdichtung zu realisieren.

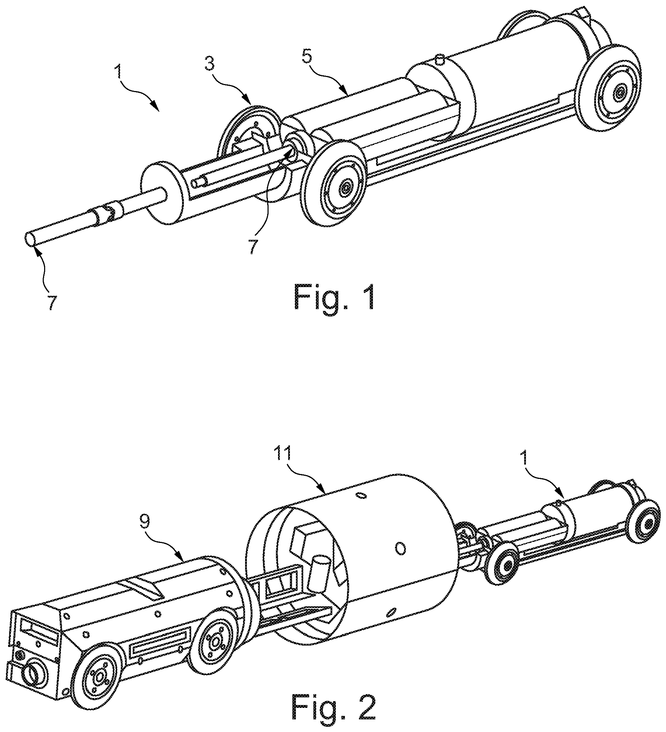

In Figur 1 ist eine Ausführungsform einer erfindungsgemäßen Vorrichtung gezeigt. Diese ist auf Rädern 3 in dem Leitungssystem verfahrbar, während in einer Kartusche 5 ein Zwei-Komponenten PU-Material gelagert ist.

Mit Hilfe eines Zwangsmischers 7 werden die beiden Komponenten vermischt und mittels einer Ausbringöffnung eines Ausbringelements an die schadhafte Stelle verbracht. Die Vorrichtung 1 kann dabei vor der eigentlichen Abdichteinrichtung inklusive Schalung und Manschette, wie in Figur 2 gezeigt, angeordnet werden.

Dabei ist in Figur 2 zu sehen, wie die Vorrichtung 1 vor einer Sanierungsvorrichtung 9 mit einer aufweitbaren Schalung 11 durch die Leitung geschoben werden kann.

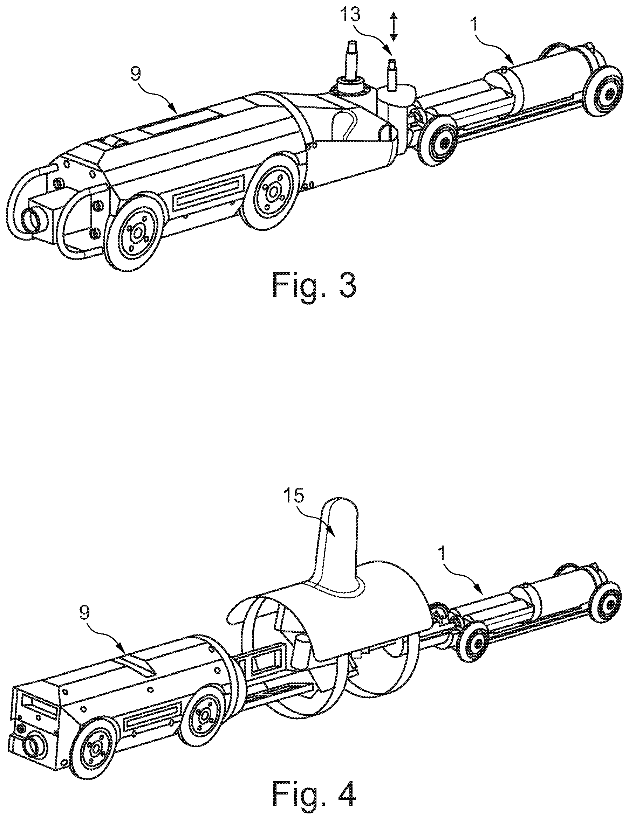

Im Fall eines Risses oder einer Wurzeleinwachsung wird ein Loch durch mit einem Bohrer 13 in die Schadstelle gebohrt und direkt im Anschluss, durch das gebohrte Loch hindurch das Harz injiziert. Dies ist in Figur 3 gezeigt.

Im Fall eines undichten Seitenanschlusses wird das Harz in die Schalung mit Seitenkanalblase 15 injiziert. Dies ist in Figur 4 gezeigt.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Vorrichtung (1) umfassend einen Vorratsbehälter (5) für PU-Material sowie eine Ausbringöffnung, wobei der Vorratsbehälter ein Zwei-Kammer System mit einem Statikmischer (7) umfasst und ein wasserreaktives, PU-Material enthält, und wobei die Ausbringöffnung der Vorrichtung an eine Schadstelle einer Leitung verbringbar ist, so dass das PU-Material die Schadstelle abdichtet

2. Vorrichtung nach Anspruch 1, **dadurch gekennzeichnet, dass** es sich bei dem PU-Material um einen Ein- oder Zwei-Komponenten PU-Material und/oder PU-Schaum handelt.

3. Vorrichtung nach einem der vorangehenden Ansprüche, **dadurch gekennzeichnet, dass** ein pneumatischer Aktuator umfasst ist, der ausgelegt und eingerichtet ist, das PU-Material und/oder den PU-Schaum aus dem Vorratsbehälter durch die Ausbringöffnung zu pressen.

4. Vorrichtung nach dem vorangehenden Anspruch, **dadurch gekennzeichnet, dass** der Vorratsbehälter, die Ausbringöffnung und der pneumatische Aktor auf einem fahrbaren Trägerelement angeordnet sind.

5. Vorrichtung nach dem vorhergehenden Anspruch, **dadurch gekennzeichnet, dass** auf dem Trägerelement ein Abdeckelement angeordnet ist, wobei das Abdeckelement einen aufweitbaren Dehnkörper umfasst, der im aufgeweiteten Zustand gegen die Wandung der Nebenleitung anliegt und zusammen mit der Abdeckung eine Schalung ausbildet, und eine Aussparung aufweist, durch die das PU-Material und/oder der PU-Schaum in den Raum zwischen der Schalung und der zu der Schalung benachbarten Wandungen der Haupt- und Nebenleitung einbringbar ist.

6. Vorrichtung nach Anspruch 5, **dadurch gekennzeichnet, dass** das PU-Material und/oder der PU-Schaum in zwei Komponenten bereitgestellt ist, wobei in der Aufbewahrungseinrichtung beide Komponenten getrennt gelagert sind, und wobei eine Mischeinrichtung umfasst ist, die vor und/oder nach dem Transportmittel angeordnet ist, wobei die Mischeinrichtung ausgelegt und eingerichtet ist, um beide Komponenten in einem vorbestimmten Mischverhältnis nach Entnahme aus der Aufbewahrungseinrichtung und insbesondere auch vor Einbringen in den Raum zwischen der Schalung und der zu der Schalung benachbarten Wandungen der Haupt- und Nebenleitung zu Mischen.

7. Vorrichtung nach Anspruch 5 oder 6, **dadurch gekennzeichnet, dass** die Vorrichtung eine Heizeinrichtung umfasst, die in das Abdeckelement, eine in einen Seitenzulauf integrierte Blase und/oder in das Transportmittel und/oder mit dem Abdeckelement, mit der Blase und/oder mit dem Transportmittel mindestens im Bereich der zweiten Aussparung in Wirkverbindung steht, wobei insbesondere die Heizeinrichtung in Form eines Heizschlauchs, einer Strahlungsquelle, insbesondere einer Infrarot- Heizvorrichtung und/oder einer Mikrowellenerzeugungseinrichtung, und/oder einer Elektroheizung ausgebildet ist.

8. Vorrichtung nach einem der Ansprüche 5 oder 6, **dadurch gekennzeichnet, dass** das PU-Material und/oder der PU-Schaum aus der Aufbewahrungseinrichtung durch eine Druckbeaufschlagung im Inneren der Aufbewahrungseinrichtung und/oder durch eine Pumpeinrichtung über das Transportmittel in den Raum hinter der Schalung einbringbar ist.

9. Vorrichtung nach Anspruch 5 oder 6, **dadurch gekennzeichnet, dass** das Abdeckelement in einem Transportzustand einen geringeren Innendurchmesser aufweist als in einem Betriebszustand, und insbesondere in Form einer Schalungs-Manschette abgebildet ist.

10. Verfahren zum Sanieren von schadhaften Leitungswandungen, umfassend die folgenden Schritte, insbesondere in dieser Reihenfolge:
a. Einbringen einer Vorrichtung nach einem der Ansprüche 1 bis 9 in eine Leitung mit einem Vorratsbehälter für PU-Material, welches schäumt und mit Wasser reagiert;
b. Einbringen des PU-Materials an der oder benachbart zu einer oder mehreren Schadstelle und/oder Zuläufen, insbesondere zum Vorabdichten der Leitung.

11. Verwendung einer Vorrichtung nach einem der Ansprüche 1 bis 9 für eine Sanierung von schadhaften Leitungswandungen im Bereich des Anschlusses einer Nebenleitung an eine Hauptleitung.

## Claims

1. Device (1), comprising a storage container (5) for PU material and a discharge opening, wherein the storage container comprises a two-chamber system with a static mixer (7) and contains a water-reactive PU material, and wherein the discharge opening of the device (1) is positionable at a damaged location of a pipe such that the PU material seals the damaged location.

2. Device according to claim 1, **characterized in that** the PU material is a one- or two-component PU material and/or PU foam.

3. Device according to one of the preceding claims, **characterized in that** a pneumatic actuator is provided, which is configured and arranged to press the PU material and/or the PU foam from the storage container through the discharge opening.

4. Device according to the preceding claim, **characterized in that** the storage container, the discharge opening, and the pneumatic actuator are arranged on a mobile support element.

5. Device according to the preceding claim, **characterized in that** a cover element is arranged on the support element, wherein the cover element comprises an expandable expansion body, which in the expanded state lies against the wall of the branch pipe and together with the cover forms a casing, and comprises a recess through which the PU material and/or the PU foam can be introduced into the space between the casing and the wall sections of the main and branch pipes adjacent to the casing.

6. Device according to claim 5, **characterized in that** the PU material and/or the PU foam is provided in two components, wherein both components are stored separately in the storage device, and wherein a mixing device is provided that is arranged before and/or after the transport means, the mixing device being configured and arranged to mix both components in a predetermined mixing ratio after being removed from the storage device and in particular also before introduction into the space between the casing and the wall sections of the main and branch pipes adjacent to the casing.

7. Device according to claim 5 or 6, **characterized in that** the device comprises a heating device that is integrated into the cover element, a bladder integrated into a side inlet, and/or the transport means, and/or is in operative connection with the cover element, with the bladder, and/or with the transport means at least in the area of the second recess, wherein in particular the heating device is designed in the form of a heating hose, a radiation source, in particular an infrared heating device and/or a microwave generating device, and/or an electric heater.

8. Device according to claim 5 or 6, **characterized in that** the PU material and/or the PU foam can be introduced from the storage device into the space behind the casing by pressurization inside the storage device and/or by a pump device via the transport means.

9. Device according to claim 5 or 6, **characterized in that** the cover element in a transport state has a smaller inner diameter than in an operating state, and is in particular designed in the form of a casing sleeve.

10. Method for rehabilitating damaged pipe walls, comprising the following steps, in particular in this sequence:
a) inserting a device into a pipe with a storage container for PU material which foams and reacts with water;
b) introducing the PU material at or adjacent to one or more damaged locations and/or inlets, in particular for pre-sealing the pipe.

11. Use of a device according to any one of claims 1 to 9 for rehabilitating damaged pipe walls in the area of the connection of a branch pipe to a main pipe.

## Revendications

1. Dispositif (1), comprenant un réservoir (5) de matériau PU ainsi qu'une ouverture de distribution, le réservoir comprenant un système à deux chambres avec un mélangeur statique (7) et contenant un matériau PU réactif à l'eau, et l'ouverture de distribution du dispositif (1) pouvant être disposée au niveau d'un point endommagé d'une conduite de manière à ce que le matériau PU colmate le point endommagé.

2. Dispositif selon la revendication 1, **caractérisé en ce que** le matériau PU est un matériau PU monocomposant ou bicomposant et/ou une mousse PU.

3. Dispositif selon l'une des revendications précédentes, **caractérisé en ce qu'**un actionneur pneumatique est prévu, lequel est conçu et agencé pour pousser le matériau PU et/ou la mousse PU hors du réservoir par l'ouverture de distribution.

4. Dispositif selon la revendication précédente, **caractérisé en ce que** le réservoir, l'ouverture de distribution et l'actionneur pneumatique sont disposés sur un élément porteur mobile.

5. Dispositif selon la revendication précédente, **caractérisé en ce qu'**un élément de recouvrement est disposé sur l'élément porteur, l'élément de recouvrement comprenant un corps extensible expansible qui, dans son état expansé, est appliqué contre la paroi de la conduite secondaire et, avec le recouvrement, forme un coffrage, et comprenant une ouverture par laquelle le matériau PU et/ou la mousse PU peut être introduit dans l'espace entre le coffrage et les parois de la conduite principale et de la conduite secondaire adjacentes audit coffrage.

6. Dispositif selon la revendication 5, **caractérisé en ce que** le matériau PU et/ou la mousse PU est fourni sous forme de deux composants, les deux composants étant stockés séparément dans le dispositif de stockage, et **en ce qu'**un dispositif de mélange est prévu, lequel est disposé avant et/ou après le moyen de transport, le dispositif de mélange étant conçu et agencé pour mélanger les deux composants dans un rapport de mélange prédéterminé après leur extraction du dispositif de stockage, et en particulier également avant leur introduction dans l'espace entre le coffrage et les parois adjacentes de la conduite principale et de la conduite secondaire.

7. Dispositif selon la revendication 5 ou 6, **caractérisé en ce que** le dispositif comprend un dispositif de chauffage intégré dans l'élément de recouvrement, une vessie intégrée dans une dérivation latérale et/ou dans le moyen de transport, et/ou en liaison fonctionnelle avec l'élément de recouvrement, la vessie et/ou le moyen de transport, au moins dans la zone de la seconde ouverture, le dispositif de chauffage étant notamment réalisé sous la forme d'un tuyau chauffant, d'une source de rayonnement, notamment d'un dispositif de chauffage infrarouge et/ou d'un dispositif de génération de micro-ondes, et/ou d'un chauffage électrique.

8. Dispositif selon la revendication 5 ou 6, **caractérisé en ce que** le matériau PU et/ou la mousse PU peut être introduit depuis le dispositif de stockage dans l'espace derrière le coffrage par une mise sous pression à l'intérieur du dispositif de stockage et/ou par un dispositif de pompage via le moyen de transport.

9. Dispositif selon la revendication 5 ou 6, **caractérisé en ce que** l'élément de recouvrement présente, dans un état de transport, un diamètre intérieur inférieur à celui dans un état de fonctionnement, et est notamment réalisé sous la forme d'un manchon de coffrage.

10. Procédé de réhabilitation de parois de conduites endommagées, comprenant les étapes suivantes, notamment dans cet ordre :
a) insertion d'un dispositif dans une conduite, avec un réservoir de matériau PU, lequel mousse et réagit avec l'eau ;
b) introduction du matériau PU au niveau ou à proximité d'un ou plusieurs points endommagés et/ou de raccordements, notamment pour un pré-colmatage de la conduite.

11. Utilisation d'un dispositif selon l'une des revendications 1 à 9 pour la réhabilitation de parois de conduites endommagées dans la zone de raccordement d'une conduite secondaire à une conduite principale.
